# EUROPEAN PATENT SPECIFICATION

(11) **EP 1 794 553 B1**
(45) Date of publication and mention of the grant of the patent: **02.05.2012**
(21) Application number: 05790683.6
(22) Date of filing: 06.09.2005
(51) Int. Cl.: G01J 1/04, G01J 5/12, G01J 5/10

(54) **RADIATION MEASURING DEVICE, RADIATION CONTROL SYSTEM, AND RADIATION MEASURING METHOD**
STRAHLUNGSMESSVORRICHTUNG, STRAHLUNGSSTEUERSYSTEM UND STRAHLUNGSMESSVERFAHREN
DISPOSITIF DE MESURE DE RAYONNEMENT, SYSTEME DE COMMANDE DE RAYONNEMENT, ET PROCEDE DE MESURE DE RAYONNEMENT

(30) Priority: 15.09.2004 EP 04104452
(43) Date of publication of application: 13.06.2007
(73) Proprietor: Koninklijke Philips Electronics N.V., 5621 BA Eindhoven (NL)
(72) Inventor: MARTENS, Christiaan, J., NL-5656 AA Eindhoven (NL)
(74) Representative: Bosma, Rudolphus Hubertus Antonius
(86) International application number: PCT/IB2005/052907
(87) International publication number: WO 2006/030345

(56) References cited:
- US-A- 3 300 646
- US-A- 3 457 407
- US-A- 3 617 757

## Description

The present invention generally relates to radiation sensors, in particular for use in dusty environments.

In particular, the invention relates in a first aspect to a device for measuring radiation, comprising a housing and a sensor that is sensitive for said radiation.

In a second aspect, the invention relates to a radiation control system, comprising a controllable source of radiation, a device according to the present invention and a control unit that is constructed to control said source of radiation on the basis of readings from the sensor of the device.

In a third aspect, the invention further relates to a method for measuring radiation, using a device of the present invention, comprising providing a source of radiation, and setting up the device for measuring said radiation.

In many circumstances it is useful to know e.g. lighting conditions. Thereto, light sensors are often used. Such sensors may provide measuring signals, on the basis of which lighting may be modified, e.g. artificial lighting may be lit. For long-time control, light sensors may be provided for permanent measurement.

To ensure a correct measurement, it is necessary that the sensitive part of the sensor is not obstructed by dust, dirt, etc. In practice, therefore, light sensors are often arranged with their sensitive part facing downwards. Furthermore, it has also been proposed to measure the light indirectly. E.g. GB 1,100,258 discloses a photo responsive device comprising a transmitting body with an internal surface having reflective, light diffusing characteristics, and a photo sensor disposed within said body. The photo sensor is disposed such that it mainly receives radiation that entered the body and was diffusely reflected by the internal surface.

A disadvantage of the known devices is that they are still rather sensitive to the build-up of dust, the deposition of vapors etc., on surfaces in the light path of the sensor. This is for example due to upwardly directed convection currents. This deposition induces a reduced, or at least modified sensitivity of the sensor as a whole, giving rise to incorrect measurements.

An object of the present invention is to provide a device of the kind mentioned in the preamble, that is less sensitive to dust, etc., and allows thus a more reliable operation under more different and more difficult circumstances.

Thereto, the invention provides a device as defined in claim 1.

By providing the sensor inside a hollow space that is surrounded by a side wall, the sensor may be protected against dust that is carried along with currents of air or other gases in a transverse direction with respect to the side wall. Furthermore, by providing the sensor as described, dust that is carried along with air currents in a direction through the housing will only brush past the sensor, without actually depositing dust thereon. For example, dust that is falling down will pass the relevant surfaces, but also dust that is carried by upward convection currents.

Furthermore, the same dust-insensitivity holds for the reflective surface, since that surface is protected against dust deposition in much the same way. This ensures that the surfaces involved in measuring radiation, i.e. sensor surface and reflective surfaces, remain dust-free. Note that no other surface is present in the path of the radiation. The reflective inner side of the housing ensures that the sensor is still able to measure radiation that enters the housing through the radiation entrance opening, because it will reflect a part of the radiation towards the sensor. In this way, a radiation measuring device is provided that allows prolonged dust free measurements, and hence reliable measuring results.

The field of view of a sensor is taken to be the range of directions for which the sensor is sensitive, in other words the "view" that a sensor has. This field of view may be determined by a housing of the sensor, by inherent characteristics of the sensor, or a combination. In case the field of view is not well-defined, in that the sensitivity is a function of (solid) angle that varies rather smoothly, it may be possible to define the field of view in terms of relative sensitivity. E.g. the field of view is the solid angle for which the sensitivity is at least 0.01 of the maximum sensitivity. Note that the present device is a device that is constructed for measuring radiation indirectly. The field of view only contains directions that strike the side wall.

The type of radiation which is to be measured may be, in principle, any type of optical radiation, such as ultraviolet, visible or infrared radiation. In particular, the radiation will be visible radiation, such that the device may be used for measurements of e.g. lighting conditions in buildings.

In a particular embodiment, a cross-section of the inner space is a nondecreasing function of distance from the radiation entrance opening. This is intended to mean that the diameter in any direction either is constant or increases when going from the radiation entrance opening into the housing. In other words, the inner space either tapers or has a constant cross-section in every part along its length, although this may vary between the two possibilities. This embodiment offers increased insensitivity against dust build-up since even an air current that varies in direction, is turbulent etc., is thus more or less screened from playing directly on the reflective surface of the inner side of the side wall and of the sensor surface.

In a special embodiment, the cross-section has a constant shape, which is intended to mean that every cross-section has substantially the same shape, although the housing as a whole may be e.g. undulating, such as a wavy tube. This embodiment ensures that the least amount is space is occupied by the housing, and thus by the device as a whole. This may be important in cases where space is tight.

In a particular embodiment, every part of the inner side is parallel to a predetermined line. In other words, this predetermined line is a tangent to every part of the inner side of the housing. The housing may thus have the shape of a tube, cylinder, or other conduit, with any possible cross-sectional shape, as long as the inner side of the side wall is straight. This ensures that the device may be positioned parallel to currents carrying dust, in particular in parallel with the direction of gravity.

In particular, the cross-section is one of a circle, a semicircle or a polygon. These cross-sectional shapes offer a device sensitivity that is relatively easy to calculate. Nevertheless, any other shape is also possible, which may e.g. be desirable because of design considerations.

A special embodiment further comprises a top wall, in which the radiation entrance opening is arranged. In particular, a cross-sectional area of the radiation entrance opening is smaller than a cross-sectional area of the inner space. Advantageously, the radiation entrance opening is provided in the top wall such that a circumferential rim is present between the radiation entrance opening and the side wall. All these measures allow an even better control of, on the one hand, radiation measurement, since unwanted radiation such as radiation from artificial sources may be blocked by selecting a suitable shape of the radiation entrance opening and a suitable orientation of the device, and, on the other hand, of dust deposition on surfaces of the device. Dust deposition may e.g., be prevented by providing the top wall with an appropriate shape that prevents turbulence, and promotes a laminar air flow, that carries dust along the surface. Furthermore, by providing a radiation entrance opening that is smaller than a cross-section of the inner space, in particular positioned such that the opening nowhere contacts the side wall, i.e. there is a circumferential rim, additional dust deposition prevention is provided.

In a particular embodiment, the top wall may be constructed as an adjustable diaphragm, offering a variable light entrance opening. This allows measurements in many different lighting conditions without causing a sensor overload.

To ensure that some radiation reaches the sensor, the inner side of the side wall has reflective properties. It is noted that reflection includes diffuse reflection and scattering reflection in the context of this invention. It is e.g. possible to produce the side wall, or at least the reflection area, of a material with desirable reflection properties, such as a white material, etc. In a special embodiment of the device, the reflection area at least partly comprises a high reflection coating. This means that at least a part of the reflection area is provided with a coating with a high reflectivity. A high reflectivity relates to a reflectivity of at least a desired value, which is dependent on the type of radiation, the type of desired reflection (diffuse, specular, etc.). In particular, however, for the purpose of the present invention, a reflectivity is assumed to be high if it has a value of at least 50%, i.e. 0.50, preferably at least 80%, i.e. 0.80, for a desired wavelength or wavelength range. Especially in the case of the radiation being visible radiation, the reflectivity may even be higher, such as 90% or even 95%, i.e. 0.90 or 0.95, respectively.

The coating may be of any desired type, such as a paint, a vapor deposited coating, or the like. Multiple types of coatings may be provided, either mixed or on separate positions. Well-known types of reflective materials for coatings comprise magnesium oxide and titanium oxide.

In a particular embodiment, a product of a sensor sensitivity and a reflectivity of the reflection area, or at least of the coating, is substantially a constant for a predetermined wavelength range. This ensures that reliable measurements are possible for radiation with a wavelength within that wavelength range. A sensor sensitivity that varies as a function of wavelength may thus be compensated for. It is however also possible to provide a sensor sensitivity and/or reflectivity and/or product thereof that does vary as a function of wavelength, e.g. to correct for certain characteristics of the radiation to be measured, such as color temperature of day light, artificial lighting etc..

In a special embodiment, the reflectivity of the reflection area is substantially a constant for a predetermined wavelength range. This allows reliable measurements, independent of the type of sensor. The sensor type may also more easily be changed, since only the characteristics of the sensor need to be known.

In the context of the invention, the expression "substantially (a) constant" is intended to mean "constant within predetermined limits", which may be determined on the basis of practical possibilities. For example, in the above cases, the reflectivity may be considered substantially a constant if its relative variation is less than 10%, e.g. the reflectivity varies between 0.80 and 0.88 within the wavelength range.

The reflection area may have any desired shape, such as the complete inner side of the side wall. In particular, however, the reflection area comprises a ring with a constant distance to the radiation entrance opening. The dimensions of the ring and of the radiation entrance opening, as well as their mutual position, determine the directions of sensitivity, of maximum sensitivity etc., according to simple geometrical relationships. This may be employed to limit the sensitivity of the sensor to certain angles. In combination with an appropriate orientation of the sensor, certain sources of radiation may be eliminated from the measurements. This will be further elucidated below, and in connection with the drawings.

In a particular embodiment of the sensor, a remaining area of the inner side outside the reflection area has a lower reflectivity than a reflectivity of the reflection area. This ensures an even better definition of the solid angle for which the device is sensitive, in that radiation that strikes the inner side of the side wall outside the reflection area is less well reflected. In particular, it is advantageous when the remaining area is at least partly provided with a material that has a high absorptivity for the radiation, preferably a higher absorptivity than that of the reflection area. In this way, radiation is prevented from being scattered or diffusely reflected towards the sensor, thus affecting correct measurements. Advantageously, said material has an absorptivity of at least 90%, such as carbon black. It is noted that it is not necessary to provide all of the remaining area, i.e. the inner side of the side wall except the reflection area, with a material with a high absorptivity. It may e.g. be sufficient when a part of the remaining area that borders the reflection area is provided with the material, in order to improve definition of the desired solid angle of sensitivity. It is further noted that both the reflection area and the remaining area may consist of two or more non-interconnected areas, such as two or more rings.

The type of sensor used in the device according to the invention is not particularly limited. E.g. the sensor comprises a photodiode, a photoresistor, etc..

In a special embodiment, the sensor is provided in a sensor opening in the side wall. This offers dust protection for the sensor. The sensor may be provided in a protective housing of its own, in which case the protective housing may be adapted to fit into the opening in the side wall. However, it may also be sufficient to provide the sensor with its own radiation sensitive surface in parallel with the inner side of the side wall.

Preferably, the sensor as a whole is provided flush or even recessed with respect to the opening in the side wall. This measure also allows dust or other dirt particles to be guided past the sensor, with a much diminished chance of deposition on the sensor.

In a particular embodiment, the device comprises at least one additional sensor. This may serve many different purposes. E.g. the additional sensor(s) may have a different sensitivity or a different range of wavelengths for which they are sensitive. Furthermore, they may be provided in different positions, for example having a different distance to the light entrance opening. This allows the device to have a different sensitivity for different directions of radiation that is incident in the device. In this way it is possible to eliminate unwanted influence of e.g. artificial lighting when measuring the intensity of daylight overhead. It is preferable when the sensor and the at least one additional sensor are individually selectable.

In a special embodiment of the device, the housing has a bottom opening opposite the radiation entrance opening, which bottom opening is in a particular embodiment covered with a bottom cap. In some cases, the bottom cap may provide additional dust protection, in that the presence of the bottom cap prevents or dampens air current carrying dust past the sensor.

The device may be sensitive to radiation that is incident through the bottom opening, opposite the radiation entrance opening. This sensitivity may be decreased by increasing the distance from the bottom opening to the sensor, i.e. generally by making the housing longer. Another way of decreasing this sensitivity is by providing the opening with a bottom cap. Although it is not necessary for the bottom cap to completely cover the bottom opening, this obviously has the advantage of completely eliminating sensitivity in the bottom direction. In case the sensitivity for dust deposition would increase by providing such a bottom cap, e.g. through build-up of dust layers inside the housing, it is alternatively possible to provide a bottom cap in the form of a light lock or labyrinth, that allows the passage of air currents, but not of radiation.

Furthermore, the device as described up to now in general has zero sensitivity for radiation that is incident from a direction parallel to the reflective area. This zero sensitivity may be modified by providing a bottom cap, especially by providing the bottom cap, on a side thereof that faces the inner space, with a material with reflective properties. Note, however, that this embodiment is less insensitive to dust build-up, since dust may collect on the inner surface of the bottom cap. Nevertheless, if the contribution of the bottom cap top the total sensitivity is limited, the influence of a decrease of the sensitivity through build-up of dust layers, deposition of vapors etc., may also be limited.

The device of the present invention allows reliable measurements of radiation since its active surfaces, i.e. surfaces involved in directing radiation towards the sensor and the sensitive surface of the sensor itself, provide the possibility of being positioned such that air currents carrying dust, vapors, etc., pass those surfaces, without actually striking them and thus without depositing dust, vapor etc., or at least to a much lower degree.

In another aspect of the invention, there is provided a controllable lighting system, comprising a controllable source of radiation, a device according to the present invention and a control unit that is constructed to control said source of radiation on the basis of readings from the sensor of the device. This lighting system is provided with the radiation measuring device according to the invention, and is thus a very reliable, during a prolonged - time, because the influence of dust is diminished. Furthermore, the device may be positioned such that e.g. light from above may be measured without any disturbing influence of dust, as described in connection with the device.

The controllable source of radiation may e.g. be a light source that may be turned on and off by the control unit, on the basis of the measured radiation level. E.g., in offices, factories, and other buildings, the lighting may be turned on only when ambient light levels are below a certain value. Furthermore, the number of light sources that is turned on or off may be determined by the control unit on the basis of measurements by the device.

Moreover, the source of radiation may be controllable in that the intensity of emitted radiation is selectable by the control unit, either discretely or continuously, e.g. by setting a supply voltage. In this way, a very good control over lighting levels may be maintained by the system according to the invention.

According to a third aspect of the invention, there is provided a method for measuring radiation, using a device according to the invention, comprising providing a source of radiation, and setting up the device according to the invention for measuring said radiation, wherein said device is positioned such that the direction of gravity is substantially perpendicular to the radiation entrance opening. In a particular embodiment, the device is positioned such that the line of gravity is parallel to the inner side of the side wall. The presence of a hollow inner space, together with the orientation of the reflection area in a vertical direction, ensures that the device as a whole is to large extent dust-insensitive. A preferred orientation is such that the radiation entrance opening is directed upwards, such that radiation from above is measurable, and radiation from below, such as light that is reflected by goods, machines, people etc., whether or not they are moving, is not comprised in the measurement.

It goes without saying that both the controllable lighting system and the method according to the invention, may be combined with more particular embodiments of the device of the invention, with the accompanying advantages as described.

Some exemplary embodiments of the invention will now be described in more detail, with reference to the drawings, in which:

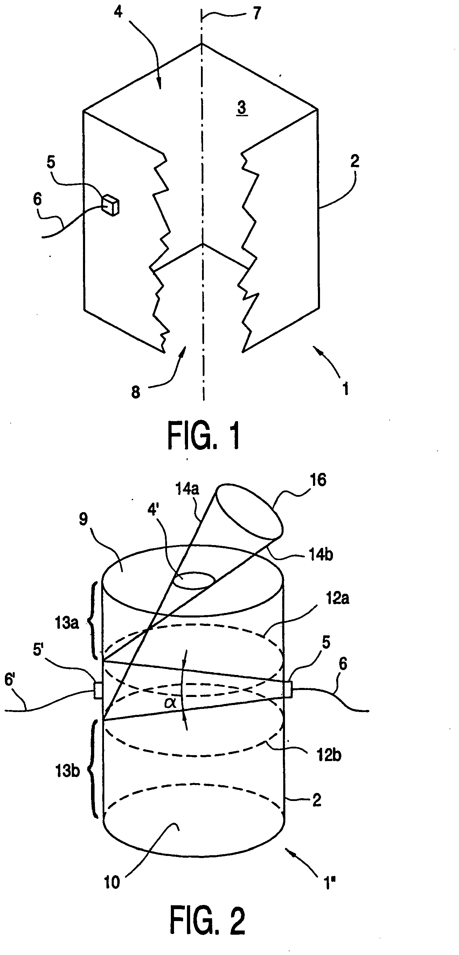

Fig. 1 shows a diagrammatic and partly cut-away view of a device 1 according to the present invention. The device comprises a side wall 2 with an inner side 3 facing an inner space. A radiation entrance opening is denoted with 4, while a bottom opening is designated 8.

A sensor 5 is present, and has an electrical connection 6. An axis of symmetry of the housing is denoted by 7.

The embodiment shown in this figure is a very simple embodiment, with a simple housing having a side wall 2 with a constant square cross-section. The side wall 2, or at least the inner side 3 thereof, may be made of or may be provided with a material having an appropriate reflectivity for radiation to be measured. Many types of paint or other coating material may be used, as well as for example plastics having an appropriate filler material, such as titania. In the present case of a housing having a square cross-section, it may be sufficient to provide only a part of the side wall 2 opposite the sensor 5 with a highly reflective coating etc..

The sensor is for example a photodiode, that may optionally be provided in a separate housing (not shown). The sensor is provided with an electrical connection 6, such as leads or an electrical cable, via which the sensor may be read out

The device 1 as shown here will be sensitive to radiation incident through the radiation entrance opening 4, as well as through the bottom opening 8. The sensor 5 is selected and/or arranged such that its field of view is a part of the side wall 2. In other words, the sensor 5 "sees" only a part of the side wall 2, or more particularly, of the inner side 3 thereof. Radiation that is incident through either opening 4 or opening 8 can not reach the sensor 5 directly, but will have to be reflected. Furthermore, radiation that is incident along the axis of symmetry 7 can not reach the sensor 5 at all, because it will pass the sensor without reflection.

Fig. 2 diagrammatically shows a second embodiment of the device according to the invention.

The device generally denoted with 1' comprises a housing having a side wall 2, a top wall 9 and a bottom cap 10.

The side wall 2 has an inner side (not specifically designated) that is provided with a reflection area between the dashed lines 12a and 12b. Parts 13a and 13b of the inner side of the side wall 2 are absorption areas.

Two sensors 5 and 5', each with an electrical connection 6 and 6', respectively, are present. The field of view of sensor 5 has been indicated as the solid angle α.

Top wall 9 comprises a radiation entrance opening 4'. The solid angle indicated by area 16, and bounded by dot and dash lines 14a and 14b indicate the range of directions of incident radiation to which the sensor 5 is sensitive, after reflection at the reflection area.

Bottom cap 10 closes a bottom opening (not specifically designated), both for radiation and for air currents.

The reflection area is in this case a ring between dashed lines 12a and 12b. Although the reflection area has been indicated as a ring, this need not be the case in practice, since the shape of the reflection area may be made dependent of the field of view a of the sensor 5. In fact, radiation that is incident on a part of the ring outside the field of view of the sensor 5 can only reach the sensor 5 through multiple reflections. However, in some cases this may be of advantage.

The solid angle 16, denoting the incident radiation that is measurable by sensor 5 after reflection at the reflection area is dependent of, among others, the width of the ring between 12a and 12b, the distance between the ring and the top wall 9 (or in other words the width of absorption area 13a), the dimensions and position of the radiation entrance opening 4', the diameter of the cylinder shaped housing and of the field of view α of sensor 5. By appropriately selecting these parameters, according to simple geometric relationships, the skilled person will easily adapt the device 1' in order to measure radiation that is incident from a desired solid angle 16.

In the present embodiment, the field of view α corresponds to the dimensions of the reflection area between lines 12a and 12b. This is not necessary, and the field of view may for example be narrower than the width of the ring between lines 12a and 12b. Note that the ring may also be a projection of the field of view onto the side wall 2, etc.. The reflection area is surrounded by two absorption areas 13a and 13b, which are in this case also ring shaped. The absorption areas 13a and 13b may comprise absorption material. This absorption material may be inherently present in the material of the side wall 2, such as a carbon filler material in a plastic material for the side wall 2. Alternatively, the absorption material may be a coating on the inner side of the side wall 2, such as lamp black, or any other paint, deposited layer, etc., that absorbs sufficiently in a desired wavelength range.

The top wall 9, with the radiation entrance opening 4', is used to block radiation that is incident from unwanted directions. As described above, thereto, the dimensions and positions of the radiation entrance opening 4' may be selected as desired. Furthermore, the rim which is formed by the material of the top wall 9 serves as an additional protection against the deposition of dust on the inner side of the side wall 2, in that any such dust, or air current would have to move from the radiation entrance opening 4' towards the side wall 2. This allows additional freedom in the orientation of the device 1' with respect to air currents, in particular with respect to the direction of gravity. Note that it may also be possible to provide more than one radiation entrance opening 4', for example in order to measure, or alternatively block, certain specific directions of incidents.

The bottom cap 10 is made of material which is sufficiently opaque for the radiation to be blocked. This ensures that the device 1 is not sensitive for radiation from below. Radiation from below relates more generally to radiation that is incident from directions opposite the directions that are incident through the radiation entrance opening 4'. In other words, radiation that is (or would be) incident through the bottom opening, that is now covered by bottom cap 10, will generally have originated from either a different source of radiation or from reflection or scattering. In either case, it is often desirable to block radiation that is not incident through radiation entrance opening 4'.

Note however, that it may also be useful to provide the alternative, i.e. providing a bottom opening without a bottom cap 10, or at least with a bottom cap 10 having a separate opening. In this case, air carrying dust particles will be able to pass through the device 1', while a closed bottom cap would prevent the dust or the current from passing through the device 1'. In the latter case, it might be possible for dust particles to collect at the bottom cap, or possibly on other parts of the inner space of the device 1'.

If a bottom cap 10 is provided, whether or not having one or more separate openings, the side of the bottom cap 10 that faces the inner space of the device 1' may be provided with reflection characteristics. This ensures that the device 1' is sensitive for radiation that is incident along a direction parallel to the inner side of the side wall 2, in this case an axis of rotational symmetry of the housing of the device 1'. Such reflection characteristics may be provided along much the same way as for the reflection area.

A second sensor 5', with an electrical connection 6', is provided and may be arranged for measuring radiation from a specific direction different from the solid angle 16. This may be useful for measuring specific arrangements of radiation sources.

A bottom cap 10 is not necessary if in particular absorption area 13b is made large enough for in that case radiation that would be incident through the bottom opening is absorbed for a large part by the absorption area 13b. The contribution of said radiation to the measurement signal may thus be made as small as desired by making the absorption area 13b appropriately large.

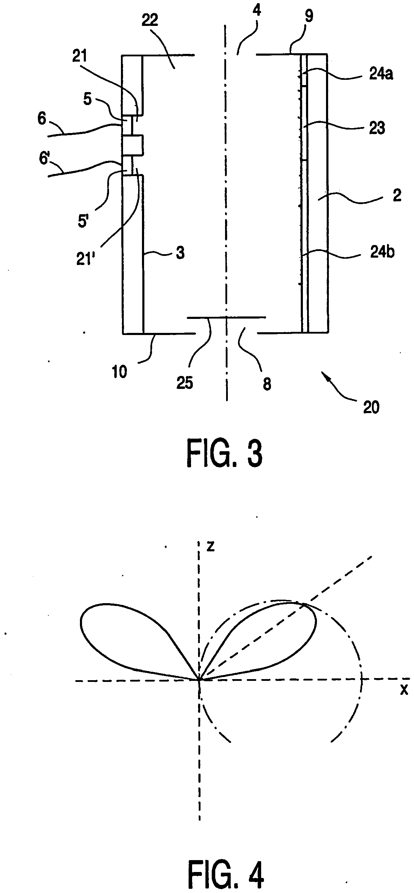

Fig. 3 shows diagrammatically a cross-section of a third embodiment of the device according to the invention.

Herein, a device 20 comprises a circumferential side wall 2 having an inner side 3, as well as a top wall 9 with a radiation entrance opening 4, and a bottom cap 10 with a bottom opening 8. The inner space of the device 20 is denoted by 22.

A sensor 5, with an electrical connection 6, and a second sensor 5', with a corresponding electrical connection 6', are provided in recesses 21 and 21', respectively, in the side wall 2.

Opposite sensors 5 and 5', the inner side of the side wall 2 is provided with a reflection area 23 and two absorption areas 24a and 24b.
The bottom opening 8 is covered with a light lock cap 25.

In the present embodiment, there are provided two sensors 5 and 5'. Any other number of sensors is also possible. The sensors 5 and 5' are provided at different positions along the length of the device 20, i.e. at different distances to the top wall 9. This allows the possibility of measuring in different directions. Advantageously, the sensors 5 and 5' are selectably read out. Furthermore, the sensors 5 and 5' are provided in recesses 21 and 21', respectively. This ensures that dust, vapors, or any other articles or material that falls down or is carried along with air currents through the device 20 will not be deposited on the sensors.

The reflection area 23 may comprise a separately deposited coating, paint etc.. Absorption areas 24a and 24b, which are optional, are provided around the reflection area 23. By appropriately dimensioning the reflection and absorption areas, as well as the radiation entrance opening 4, and the geometrical dimensions of the device 20 as a whole, a desired range of directions for which the device 20 is sensitive may be selected. The field of view of the sensor 5 should preferably comprise at least a part of the reflection area 23. The same holds for the sensor 5', which may for example be tilted or may be constructed to have a different field of view. Alternatively, a separate reflection area (not shown) may be provided for the second sensor 5'.

The bottom opening 8 is covered with a light lock cap 25. This light lock cap 25 allows air current to pass through the inner space 22 of the device 20, thus ensuring that particles, etc., carried along with the current will not be deposited. Note however, that no radiation can reach the sensors 5 or 5', nor the reflection area 23 directly. In other words, the radiation will always be incident on an absorption area, and will thus not disturb any measurements.

Figure 4 diagrammatically shows an exemplary graph of device sensitivity as a function of angle of incidence with respect to the axis of symmetry. The graph is represented by the solid line.

It can be clearly seen that sensitivity in the "forward" direction, i.e. along the .. z-axis in the graph, is zero, since all radiation pass the sensor without striking its surface. Furthermore, the sensitivity along the x-axis is also zero, since no direct radiation can reach the sensor.

The dot and dash circle indicates a theoretical curve, following a cosine of the angle of incidence. The actual sensitivity curve partly fills this semi-circle, forming a lobe. The lobe in the left of the graph is the sensitivity to radiation that is incident through the bottom opening of the device. Here, the device is symmetrical, but the bottom sensitivity may be removed along any of the methods as described above.

Furthermore, there is indicated a direction of maximum sensitivity, represented as the slanting dashed line. This direction depends on parameters like dimensions of the housing, the radiation entrance opening, the reflection area etc. By carefully selecting values for these parameters, a desired direction of maximum sensitivity may be set. Similarly, a desired curve for the total sensitivity as a function of direction may, within limits, be set.

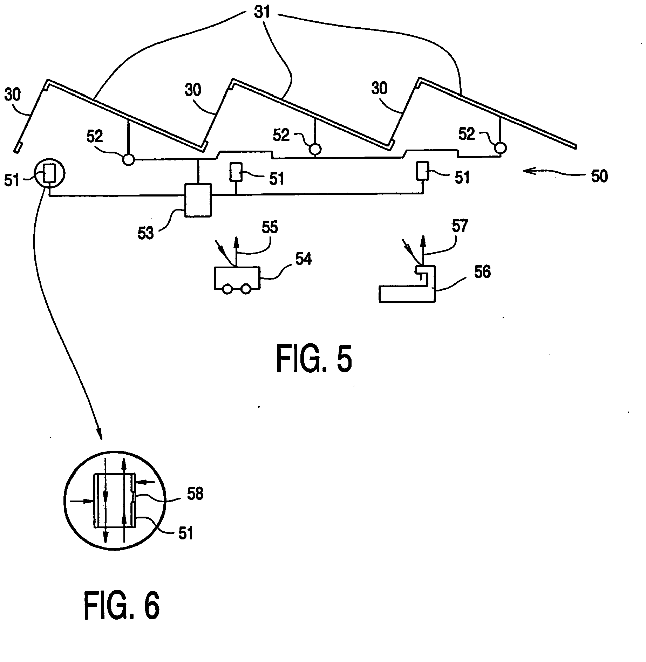

Figure 5 diagrammatically shows a controllable lighting system according to the invention.

The controllable lighting system, generally denoted 50, comprises a number of sensors 51 according to the invention, a number of controllable light sources 52 and a control unit 53.

The system 50 is mounted beneath windows 30 in a roof 31.

A moveable cart is denoted 54, while a piece of equipment is denoted 56. Reflected light is denoted 55, and 57, respectively.

In most factories, and other large buildings, direct sunlight is often blocked, to avoid unpleasant brightness or even blinding of personnel. Thereto, the roof windows are often mounted facing north, and hence they are sometimes called "northern lights". In Figure 5, it is assumed that the windows 30 face north. Hence the only light that is admitted is indirect sunlight

In order to ensure a constant, or at least a certain minimum, lighting level, that is largely independent of outside or ambient light levels, the artificial lighting, in.the form of lamps 52, are controllable. When the ambient light level is sufficient, the lamps 52 are turned of by the control unit 53. When the light level drops, either because of clouds, the time of day or the time of the year etc., the control unit 53 lights one or more lamps 52, up to a desired lighting level. Furthermore, the number of lamps 52, or other radiation sources, is of course freely selectable, depending on the size of the room, the desired light level, etc..

The light level is measured by means of a number of sensor devices 51 according to the present invention. In principle, one device would suffice, but using a small number of devices makes the system as a whole less vulnerable to incorrect measurements, due to local shades, unintentional covering etc. Note that it is advantageous to use sensor devices that are not sensitive for radiation incident from below, since various reflected light, e.g. as indicated by 55 and 57, may cause incorrect measurements of light levels. Alternatively, light may be absorbed by surfaces, either temporarily present or permanent. This would mimic too low light levels. In other words, measuring only truly incident light from above is advantageous. Note that with prior art sensors, this would cause a large ingress of dust etc. into the device.

A detail of one of the sensor devices 51 as shown in Figure 6, clarifies this further. The device 51 shown comprises a sensor 58. Further, there are shown a number of air currents that may carry dust or other dirt, that might obstruct the sensor 58. For example, there are shown a horizontal current from the left, one from the right, which are blocked by the side wall of the device, as well as air currents from above (gravitationally induced) and from below (convection etc.), that pass through the device 51, but still avoid the sensor 58.

Thus it is shown that the device according to the present invention reduces device sensitivity for dust etc. to a large extent, making it possible to use the device in a dirty environment, such as many industries.

A remark to be made here is that, in many of the examples, a preferred orientation for the device was the vertical direction. The device would then measure radiation from above, and sometimes from below, while overall relevant directions of dust transportation were either horizontally or vertically. It goes without saying that in other circumstances other preferred measuring directions may also be used, while redirecting the device according to the invention for enabling measurement in those desired directions still offers reduced sensitivity to dust. The sensor is still mounted perpendicular to dust and air currents able to pass through the device, while other dust and air currents are blocked by the side wall.

## Claims

1. A device (1; 1'; 20; 51) arranged to measure radiation, comprising a housing and a sensor (5, 5'; 58) that is sensitive for said radiation, the housing having a radiation entrance opening (4; 4') and comprising a circumferential side wall (2) which surrounds a hollow inner space (22) and which is reflective for said radiation on at least a reflection area (23) of an inner side (3) of the side wall facing the inner space (22) and arranged so as to reflect part of the radiation towards the sensor, wherein the sensor (5, 5'; 58) is arranged with respect to said side wall (2) in such a way that the radiation entrance opening (4; 4') is outside a field of view of said sensor (5, 5'; 58) the sensor being provided flush or recessed with respect to an opening in the side wall, and wherein the radiation entrance opening is arranged to allow an air current into the device such that the air current will brush past the sensor and reflection surface.

2. The device of claim 1, wherein a cross-section of the inner space (22) is a nondecreasing function of distance from the radiation entrance opening (4; 4').

3. The device of claim 2, wherein the cross-section has a constant shape.

4. The device of any preceding claim, wherein every part of the inner side (3) is parallel to a predetermined line.

5. The device of any of claims 2-4, wherein the cross-section is one of a circle, a semicircle or a polygon.

6. The device of any preceding claim, further comprising a top wall (9), in which the radiation entrance opening (4; 4') is arranged.

7. The device of claim 6, wherein a cross-sectional area of the radiation entrance opening (4; 4') is smaller than a cross-sectional area of the inner space (22).

8. The device of any preceding claim, wherein the reflection area (23) at least partly comprises a high reflection coating.

9. The device of any preceding claim, wherein a product of a sensor sensitivity and a reflectivity of the reflection area (23) is substantially a constant for a predetermined wavelength range.

10. The device of claim 9, wherein the reflectivity of the reflection area (23) is substantially a constant for a predetermined wavelength range.

11. The device of any preceding claim, wherein the reflection area (23) comprises a ring with a constant distance to the radiation entrance opening (4; 4').

12. The device of any preceding claim, wherein a remaining area (13a, 13b; 24a, 24b) of the inner side (3) outside the reflection area (23) has a lower reflectivity than a reflectivity of the reflection area (23).

13. The device of any preceding claim, wherein the sensor (5, 5'; 58) is provided in a sensor opening in the side wall (2).

14. The device of any preceding claim, comprising at least one additional sensor (6').

15. The device of any preceding claim, wherein the housing has a bottom opening (8) opposite the radiation entrance opening (4; 4').

16. The device of claim 15, wherein the bottom opening (8) is covered with a bottom cap (10).

17. A controllable lighting system (50), comprising a controllable source (52) of radiation, a device (51) according to any of claims 1-16 and a control unit (53) that is constructed to control said source (52) of radiation on the basis of readings from the sensor (5, 5'; 5 8) of the device (51).

18. A method for measuring radiation, using a device (1; 1 ; 20; 51) of any of claims 1-16, comprising providing a source (52) of radiation, and setting up the device (1; I1; 20; 51) for measuring said radiation, wherein said device (1; 1'; 20; 51) is positioned such that the direction of gravity is substantially perpendicular to the radiation entrance opening (4; 4').

## Patentansprüche

1. Vorrichtung (1; 1'; 20; 51), die so eingerichtet ist, dass sie Strahlung misst, und ein Gehäuse und einen Sensor (5, 5'; 58) umfasst, der für Strahlung empfindlich ist, wobei das Gehäuse eine Strahlungseintrittsöffnung (4; 4') aufweist sowie eine umlaufende Seitenwand (2) umfasst, die einen hohlen Innenraum (22) umgibt und die für die Strahlung auf zumindest einer Reflexionsfläche (23) einer dem Innenraum (22) zugewandten Innenseite (3) der Seitenwand reflektierend ist, und die so angeordnet ist, dass sie einen Teil der Strahlung zu dem Sensor hin reflektiert, wobei der Sensor (5, 5'; 58) gegenüber der Seitenwand (2) so angeordnet ist, dass sich die Strahlungseintrittsöffnung (4; 4') außerhalb eines Sehfeldes des Sensors (5, 5'; 58) befindet, wobei der Sensor gegenüber einer Öffnung in der Seitenwand bündig oder vertieft vorgesehen ist, und wobei die Strahlungseintrittsöffnung so angeordnet ist, dass sie es einem Luftstrom in die Vorrichtung ermöglicht, an dem Sensor und der Reflexionsfläche vorbeigeführt zu werden.

2. Vorrichtung nach Anspruch 1, wobei ein Querschnitt des Innenraums (22) eine nicht abnehmende Funktion des Abstands von der Strahlungseintrittsöffnung (4; 4') ist.

3. Vorrichtung nach Anspruch 2, wobei der Querschnitt eine konstante Form aufweist.

4. Vorrichtung nach einem der vorangegangenen Ansprüche, wobei jeder Teil der Innenseite (3) parallel zu einer vorgegebenen Linie vorgesehen ist.

5. Vorrichtung nach einem der Ansprüche 2-4, wobei der Querschnitt ein Kreis, ein Halbkreis oder ein Polygon ist.

6. Vorrichtung nach einem der vorangegangenen Ansprüche, die weiterhin eine obere Wand (9) umfasst, in der die Strahlungseintrittsöffnung (4; 4') angeordnet ist.

7. Vorrichtung nach Anspruch 6, wobei eine Querschnittsfläche der Strahlungseintrittsöffnung (4; 4') kleiner als eine Querschnittsfläche des Innenraumes (22) ist.

8. Vorrichtung nach einem der vorangegangenen Ansprüche, wobei die Reflexionsfläche (23) zumindest zum Teil eine Beschichtung mit hohem Reflexionsvermögen umfasst.

9. Vorrichtung nach einem der vorangegangenen Ansprüche, wobei ein Produkt einer Sensorempfindlichkeit und einer Reflektivität der Reflexionsfläche (23) im Wesentlichen eine Konstante für einen vorgegebenen Wellenlängenbereich darstellt.

10. Vorrichtung nach Anspruch 9, wobei die Reflektivität der Reflexionsfläche (23) im Wesentlichen eine Konstante für einen vorgegebenen Wellenlängebereich darstellt.

11. Vorrichtung nach einem der vorangegangenen Ansprüche, wobei die Reflexionsfläche (23) einen Ring mit einem konstanten Abstand zu der Strahlungseintrittsöffnung (4; 4') umfasst.

12. Vorrichtung nach einem der vorangegangenen Ansprüche, wobei eine verbleibende Fläche (13a, 13b; 24a, 24b) der Innenseite (3) außerhalb der Reflexionsfläche (23) eine geringere Reflektivität als eine Reflektivität der Reflexionsfläche (23) aufweist.

13. Vorrichtung nach einem der vorangegangenen Ansprüche, wobei der Sensor (5, 5'; 58) in einer Sensoröffnung in der Seitenwand (2) vorgesehen ist.

14. Vorrichtung nach einem der vorangegangenen Ansprüche, die mindestens einen zusätzlichen Sensor (6') aufweist.

15. Vorrichtung nach einem der vorangegangenen Ansprüche, wobei das Gehäuse eine untere Öffnung (8) gegenüber der Strahlungseintrittsöffnung (4; 4') aufweist.

16. Vorrichtung nach Anspruch 15, wobei die untere Öffnung (8) mit einer unteren Abdeckung (10) bedeckt ist.

17. Steuerbares Beleuchtungssystem (50) mit einer steuerbaren Strahlungsquelle (52), einer Vorrichtung (51) nach einem der Ansprüche 1-16 sowie einer Steuereinheit (53), die so eingerichtet ist, dass sie die Strahlungsquelle (52) aufgrund von Anzeigewerten von dem Sensor (5, 5'; 58) der Vorrichtung (51) steuert.

18. Verfahren zur Strahlungsmessung unter Verwendung einer Vorrichtung (1; 1'; 20; 51) nach einem der Ansprüche 1-16, wonach eine Strahlungsquelle (52) vorgesehen und die Vorrichtung (1; 1'; 20; 51) zur Messung der Strahlung eingerichtet wird, wobei die Vorrichtung (1; 1'; 20, 51) so positioniert ist, dass die Schwerkraftrichtung im Wesentlichen senkrecht zu der Strahlungseintrittsöffnung (4; 4') verläuft.

## Revendications

1. Dispositif (1 ; 1' ; 20 ; 51) agencé pour mesurer un rayonnement, comprenant un boîtier et un capteur (5, 5' ; 58) qui est sensible au dit rayonnement, le boîtier ayant une ouverture d'entrée de rayonnement (4 ; 4') et comprenant une paroi latérale circonférentielle (2) qui entoure un espace intérieur creux (22) et qui est réflective pour ledit rayonnement sur au moins une zone de réflexion (23) d'un côté intérieur (3) de la paroi latérale faisant face à l'espace intérieur (22) et agencé de manière à refléter une partie du rayonnement vers le capteur, dans lequel le capteur (5, 5' ; 58) est agencé par rapport à ladite paroi latérale (2) de telle manière que l'ouverture d'entrée de rayonnement (4 ; 4') se trouve à l'extérieur d'un champ de vision dudit capteur (5, 5' ; 58), le capteur étant fourni arasé ou renfoncé par rapport à une ouverture dans la paroi latérale, et dans lequel l'ouverture d'entrée de rayonnement est agencée pour permettre un courant d'air dans le dispositif de sorte que le courant d'air passe par le capteur et la surface de réflexion.

2. Dispositif selon la revendication 1, dans lequel une coupe transversale de l'espace intérieur (22) est une fonction non décroissante d'une distance à partir de l'ouverture d'entrée de rayonnement (4 ; 4').

3. Dispositif selon la revendication 2, dans lequel la coupe transversale a une forme constante.

4. Dispositif selon l'une quelconque des revendications précédentes, dans lequel chaque partie du côté intérieur (3) est parallèle à une ligne prédéterminée.

5. Dispositif selon l'une quelconque des revendications 2 à 4, dans lequel la coupe transversale est l'un d'un cercle, un demi-cercle ou un polygone.

6. Dispositif selon l'une quelconque des revendications précédentes, comprenant en outre une paroi supérieure (9), dans laquelle l'ouverture d'entrée de rayonnement (4 ; 4') est agencée.

7. Dispositif selon la revendication 6, dans lequel une surface de coupe transversale de l'ouverture d'entrée de rayonnement (4 ; 4') est inférieure à une surface de coupe transversale de l'espace intérieur (22).

8. Dispositif selon l'une quelconque des revendications précédentes, dans lequel la zone de réflexion (23) comprend au moins partiellement un revêtement de réflexion élevée.

9. Dispositif selon l'une quelconque des revendications précédentes, dans lequel un produit d'une sensibilité de capteur et d'une réflexivité de la zone de réflexion (23) est sensiblement une constante pour une plage de longueur d'onde prédéterminée.

10. Dispositif selon la revendication 9, dans lequel la réflexivité de la zone de réflexion (23) est sensiblement une constante pour une plage de longueur d'onde prédéterminée.

11. Dispositif selon l'une quelconque des revendications précédentes, dans lequel la zone de réflexion (23) comprend un anneau avec une distance constante à l'ouverture d'entrée de rayonnement (4 ; 4').

12. Dispositif selon l'une quelconque des revendications précédentes, dans lequel une zone restante (13a, 13b ; 24a, 24b) du côté intérieur (3) à l'extérieur de la zone de réflexion (23) a une réflexivité inférieure à une réflexivité de la zone de réflexion (23).

13. Dispositif selon l'une quelconque des revendications précédentes, dans lequel le capteur (5, 5' ; 58) est disposé dans une ouverture de capteur dans la paroi latérale (2).

14. Dispositif selon l'une quelconque des revendications précédentes, comprenant au moins un capteur supplémentaire (6').

15. Dispositif selon l'une quelconque des revendications précédentes, dans lequel le boîtier a une ouverture inférieure (8) opposée à l'ouverture d'entrée de rayonnement (4 ; 4').

16. Dispositif selon la revendication 15, dans lequel l'ouverture inférieure (8) est recouverte d'un capuchon inférieur (10).

17. Système d'éclairage pouvant être commandé (50), comprenant une source pouvant être commandée (52) de rayonnement, un dispositif (51) selon l'une quelconque des revendications 1 à 16 et une unité de commande (53) qui est conçue pour commander ladite source (52) de rayonnement sur la base des relevés du capteur (5, 5' ; 58) du dispositif (51).

18. Procédé de mesure de rayonnement, utilisant un dispositif (1 ; 1' ; 20 ; 51) selon l'une quelconque des revendications 1 à 16, comprenant la fourniture d'une source (52) de rayonnement, et la configuration du dispositif (1 ; 1' ; 20 ; 51) pour mesurer ledit rayonnement, dans lequel ledit dispositif (1 ; 1' ; 20 ; 51) est positionné de sorte que la direction de gravité soit sensiblement perpendiculaire à l'ouverture d'entrée de rayonnement (4 ; 4').
